# EUROPEAN PATENT SPECIFICATION

(11) **EP 1 109 681 B1**
(45) Date of publication and mention of the grant of the patent: **19.03.2003**
(21) Application number: 98944688.5
(22) Date of filing: 02.09.1998
(51) Int. Cl.: B60C 13/00, B60C 13/02

(54) **A TIRE SIDEWALL**
EINE REIFENSEITENWAND
FLANC DE PNEU

(43) Date of publication of application: 27.06.2001
(60) Divisional application: 02020271.9
(73) Proprietor: THE GOODYEAR TIRE & RUBBER COMPANY, Akron, Ohio 44316-0001 (US)
(72) Inventor: RATLIFF, Billy, Joe, Jr., Akron, OH 44319 (US)
(74) Representative: Leitz, Paul
(86) International application number: US9818253
(87) International publication number: WO00013922

(56) References cited:
- WO-A-97/17217
- GB-A- 2 008 062
- GB-A- 2 114 511
- US-A- 4 823 856
- US-A- 5 303 758
- PATENT ABSTRACTS OF JAPAN vol. 097, no. 002, 28 February 1997 & JP 08 282215 A (BRIDGESTONE CORP), 29 October 1996

## Description

### Technical Field

This invention generally pertains to design patterns for opaque articles and in particular to design patterns for tire sidewalls. More specifically, this invention relates to at least two design patterns used on the surface of a opaque article, one pattern comprising pluralities of parallel ridges oriented to yield a striking visual appearance.

### Background Art

The invention is particularly applicable to the black sidewalls of rubber tires.

Manufacturers have for many years placed numerals, letters, characters or other designations hereinafter referred to generally as "indicia" upon the sidewalls of tires to enhance the appearance and marketability of their products. Such markings are described in U.S. Patent Nos. 4,198,744 and 4,823,856.

The subject matter of U.S. Patent No. 4,198,774, issued April 22, 1980, was invented by Roberts and Lowther. The corresponding British Patent is GB 20008062. The invention describes the use of lineal projections which are substantially straight, parallel, and of substantially identical cross-section to form indicium. An indicium is described as a letter or numeral or the like.

A latter issued patent of Mr. Charles W. Roberts, U.S. Patent No. 4,823,856, issued April 25, 1989, and corresponding with the preamble of claim 1 describes the use of serrated markings for the sidewall of a tire. The invention relates to a design of a substantially flat ungrooved portion surrounded by a serrated portion which includes a plurality of ribs separated by grooves. The combination of the flat design surrounded by a serrated band portion defines an indicium.

In WO 97-17217A patent application dated 15 May 1997, and corresponding with the preamble of claim 4, a tire sidewall having an annular surface, has a design pattern. The design pattern has a plurality of ridges of similar cross-sectional shape. Each ridge is substantially parallel to an adjacent ridge of the first pattern and inclined relative to the circumferential direction. The second pattern is a protrusion of rubber which bounds or outlines the first pattern of ridges.

A similar concept as that stated above can be found in Patent Abstracts of Japan, Vol. .097, No. 002, 28 February 1997, and JP 08 282215A dated October 1996 wherein a distinct letter is bounded by a flat surface bounded by a protrusion.

In GB-A-2 114 511 patent publication dated 24 August 1993, teaches to provide raised and recessed portions for a design pattern whereby visual contrast is achieved by the use of raised portions and recessed portions of different colored rubber. The design pattern as such used the same color rubber, but fails to teach distinguishing the first and second design pattern by using surfaces with different appearance.

The present invention employs the use of at least two distinctive design patterns which improves the visual appearance of an opaque article by increasing the visual contrast of the surfaces of articles. The invention is particularly well-suited for the sidewall of a tire, particularly a black sidewall tire. The combination of design patterns in at least one embodiment of the invention, has the effect of making the sidewall markings boldly stand out when viewed from any angular perspective.

### Summary of the Invention

According to a first aspect of the present invention, there is the provision of a tire sidewall according to claim 1. Preferred embodiments are defined in dependent claims 2 and 3.

According to a second aspect of the present invention, there is the provision of a tire sidewall according to claim 4. Preferred embodiments are defined in dependent claims 5 and 6.

### Definitions

"Axial" and "axially" are used herein to refer to lines or directions that are parallel to the axis of rotation of a tire.

"Circumferential" as used herein means lines forming or enclosing an arc, the arc being within a plane perpendicular to the axis of rotation of the tire.

"Light deflection" means that as light strikes a surface, the reflected light is angularly directed relative to the angle of incidence of the light source yielding what appears to be a light absorbing characteristic to an observer who is positioned in general alignment which with light source.

"Light reflection" means that as light strikes an object, the reflected light is generally aligned with the angle of incidence yielding what appears to be a shiny or reflective characteristic to an observer who is positioned in general alignment with the light source.

"Radial" and "radially" are used to mean directions radially toward or away from the axis of rotation of the tire.

"Sidewall" means that outer portion of a tire between the tread and the bead.

"Tread" means that portion of the tire that comes into contact with the road under normal inflation and load.

### Brief Description of the Drawings

FIGURE 1 illustrates a side view of a tire (10) with a pattern A and pattern B shown on the sidewall (12) of the tire (10), pattern B being superimposed over pattern A.
FIGURE 2A is a cross-sectional view of the tire (10) of FIG. 1.
FIGURE 2B is a cross-sectional view of the patterns A and B.
FIGURE 3 is an side view of a tire with patterns, A, B and C, wherein pattern A is superimposed over pattern B, and both patterns A and B lie within a band formed by pattern C.
FIGURE 4 is an enlarged cross-sectional view of patterns A, B and C taken from FIGURE 3.
FIGURE 5 shows a prior art tire sidewall.

### Detailed Description of the Invention

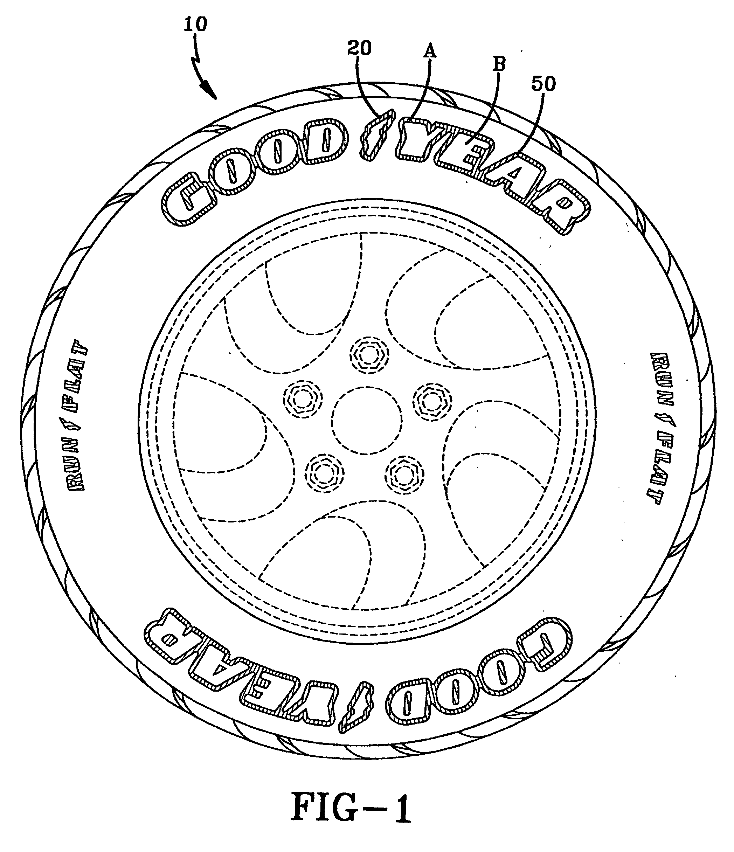

A side view of a tire (10) with design patterns A and B, on the sidewall (12) of the tire (10) is illustrated in FIGURE 1.

In the preferred embodiment shown in exemplary FIGURE1, pattern A forms a wide decorative indicia outline comprised of ridges (20). The ridges (20) of pattern A each extend in a substantially radial direction. In the illustrated preferred embodiment, ridges (20) of pattern A extend equally in length and have similar cross-sectional shapes. Each radially extending ridge (20) appears to be parallel to an adjacent ridge (20).

Design pattern B is illustrated in FIG.1 superimposed over a portion of the larger design pattern A. Pattern B has a similarly flat or smooth surface (30) devoid of the ridges of pattern A, pattern A outlining pattern B. Pattern A forms a background for the pattern B markings.

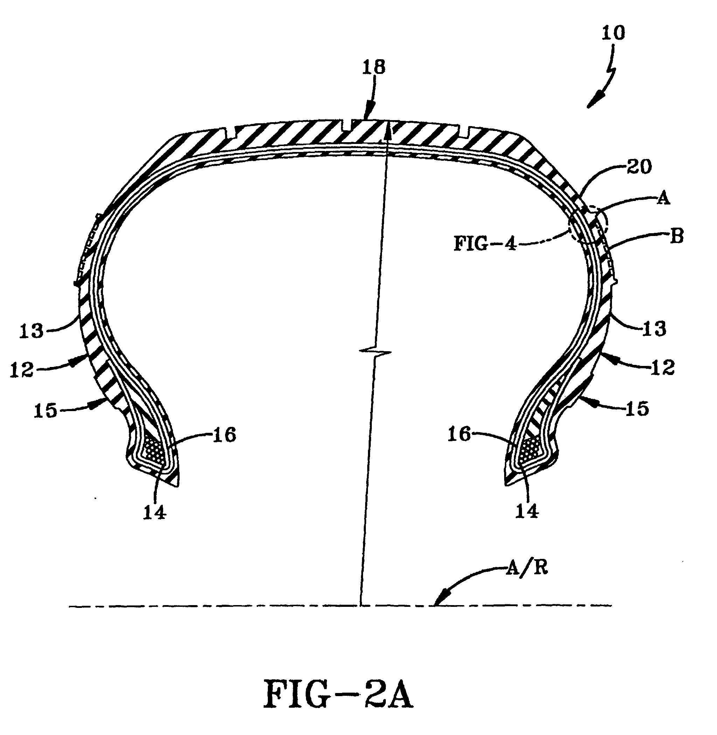

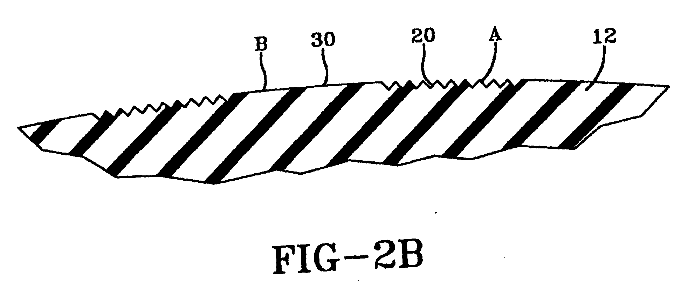

FIGURE 2A illustrates a cross-sectional view of the tire (10) of FIGURE 1. The tire (10) has an axis of rotation (A/R), a pair of annular beads (14), carcass plies (16) wrapped around the annular beads (14), a tread (18) disposed over the carcass plies (15) in a crown area of the tire and sidewalls (12) disposed between the tread (18) and the beads (14). A sidewall (12) of the tire (10) has the design patterns A and B located on the exterior annular surface (13) of the sidewall. Near the bead region a secondary decorative band (15) is illustrated.

As shown in FIGURE 2B the ridges (20) of pattern A are preferably of trapezoidal shape which approximate a triangular cross-section. The bases of the trapezoidal cross-sections are ideally positioned very close or intersect such that pattern A exhibits minimal surfaces parallel to the tire sidewall (12). The use of these trapezoidal cross-sections yield a generally light deflecting or non-reflective background when viewed from a perpendicular position relative to the sidewall (12).

The design pattern B as illustrated at FIG. 2B is smooth in shape approximating flat shapes. The ridges (20) of pattern A are spaced a sufficient distance to provide a light shadowing space outlining the flat light reflecting surface (30). The flat surfaces (30) yield a pattern B exhibiting a light contrasting appearance whereby the observer can readily distinguish the design patterns B which stand out when compared to the outlining background pattern A.

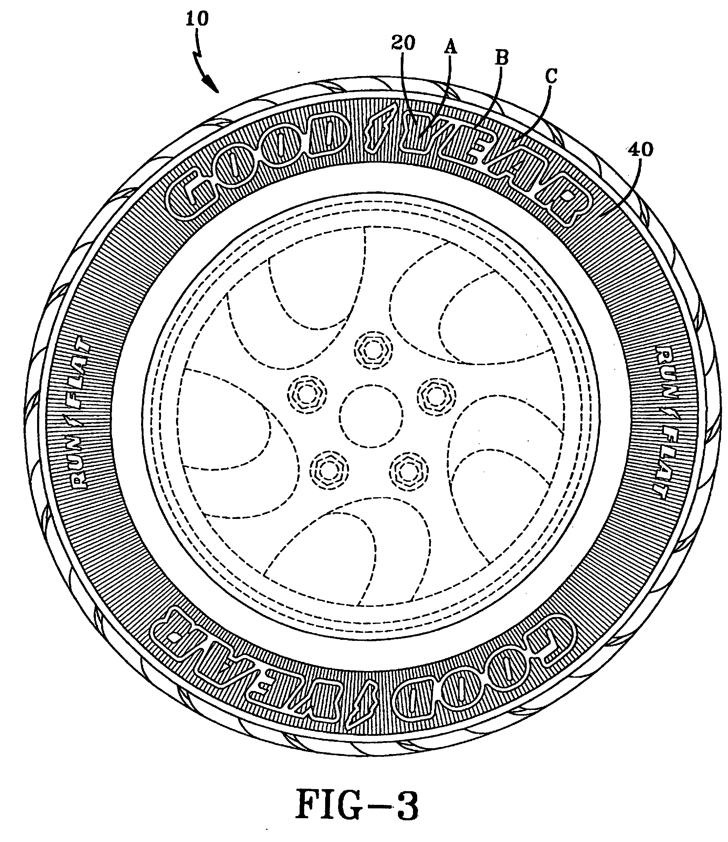

FIGURE 3 shows an alternative embodiment tire sidewall according to the invention, the first pattern A having parallel ridges is superimposed over the second pattern B having a flat surface, both pattern A and pattern B forming similar indicia. The indicia of pattern A is smaller than the indicia of pattern B. Both patterns A and B are located within a third pattern C, pattern C having substantially parallel ridges (50) that arranged to form a wide circumferential band around the tire's sidewall. Preferably the patterns forming the larger indicia extend rather uniformly from the superimposed indicia of pattern A or pattern B. As shown, the letters or indicia are closely spaced the outlining pattern blend seamlessly into an adjacent letter, however, it is important that the resultant effect is that both adjacent letters are clearly discernable to the observer.

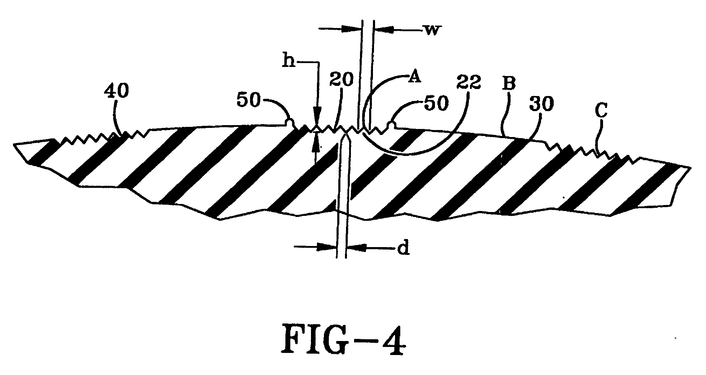

FIGURE 4 is an enlarged cross-sectional view of a portion, of pattern C taken from FIGURE 3. The ridge (40) of pattern C has an identical cross-section to those of the pattern A in the preferred embodiment as illustrated. The shape and size of the ridges (40) of design pattern C alternatively could be dissimilar. One of the primary functions of design pattern C is to provide a circumferential band for the overall sidewall design formed by the combination of patterns A, B and C. The pattern C also provides a means to improve venting of gases in the region of the sidewall during the molding of the tire.

FIGURE 4 also shows an enlarged cross-sectional view of pattern A taken from FIGURE 3. The view illustrates the trapezoidal ridges (20) of generally triangular cross-sectional shape. To facilitate molding and mold construction, the adjacent bases (22) may be spaced a distance (d) of less than 1\2 the height (h) of the ridge (20) and the space (d) should be less than 50% the width (w) of the base (22). This insures that the flat surface (23) formed by the spacing of the ridges (20) is minimized. The spaced distance (d) is effectively shadowed by the adjacent ridges (20) insuring a light deflecting or non-reflective background. The ridges (20) may extend to a height of 0.45 mm from the sidewall and have a base (22) of 0.9 mm in width. In the preferred embodiment, each base (22) of ridge (20) is spaced a distance (d) of less than one half the width of the base. In the preferred embodiment the distance (d) was set at 0.3 mm. The very tip of the triangular shaped ridge (20) may be truncated in order to facilitate mold construction.

FIGURE 4 also shows an enlarged cross-sectional view of pattern B taken from FIGURE 3. The pattern A is superimposed over the generally flat surface (30) of pattern B which is outlined by the fine annular ridges (50). To enhance the visual appearance of the pattern B, it is preferred that the outline ridges (50) of pattern B extend outward from the surface of the sidewall. In the preferred embodiment, the ridges (50) of pattern B extend from the sidewall a distance of less than 1 mm. The ridges (20, 40) of pattern A and pattern C extend from the sidewall (12) of the tire (10) distances of less than 1 mm respectively. It is not considered essential that the ridges (40) of pattern C extend a distance less than the ridges (20) of pattern A. Pattern B, however, need not extend outwardly from the ridges (20) of pattern A in order to achieve the most striking visual appearance.

The invention, as described above has several distinct advantages in addition to improved appearance. The outlined pattern B indicias by a larger pattern A indicias are believed to be preferable to the use of a simple solid indicium because the use of multiple ridges of pattern A tend to highlight the indicia because the observer's attention is drawn to the contrasting appearance as illustrated in FIGURE 1.

A second benefit of the invention is that the intersection of the ridges (20) of pattern A with the annular ridges (50) of pattern B and the ridges (40) of pattern C provide improved venting of entrapped gases. The improved venting greatly minimizes the occurrence of surface blemishes that occur as a result of entrapped gases during the molding process.

The visual appearance of the tire (10) is believed to be an improvement over currently available products. The design pattern B, when used to outline a smaller superimposed pattern A, yields a character having a dynamic visual impression. The wide decorative band formed by pattern C provides a background which enhances the characters formed by patterns A and B. The wide decorative band of C has changing light reflection characteristics as a function of tire position and the observer's perspective view. The ridges (20) of pattern A tend to deflect light at the top and bottom of the tire but exhibit a shiny appearance to the left or right while the flat surface (30) of pattern B is highly light reflective as shown in FIGURE 3.

It has been observed that a tire made according to the present invention has characters of unique visual appearance to the observer of the tire. In the particular, when the observer looks at the tire sidewall from any angular perspective relative to the tire, the characters of pattern A appear dark against the shiny or highly light reflective pattern B yielding a high contrast with the background. The pattern B appears light against the dark pattern A yielding an inverse contrast opposite to the light reflective appearance. This visual appearance adds to the unique aesthetic quality and appeal of this sidewall design because the sidewall lettering has a greatly enlarged dimensional appearance.

The prior art tires of the past were designed to maximize contrast by using a combination of protruding flat letters or outlined lettering on a flat background, striped letters on a flat background, or flat letters on a striped background. The use of flat lettering in combination with a striped outline background as described above achieves a novel contrast changing appearance heretofore unachieved in tire sidewall marking.

To those consumers of tires, the efforts manufactures of tire go to get their products noticed is mostly unappreciated. To those skilled in the art of tire design such features that enhance the readability of the indicia are very important and quite valuable.

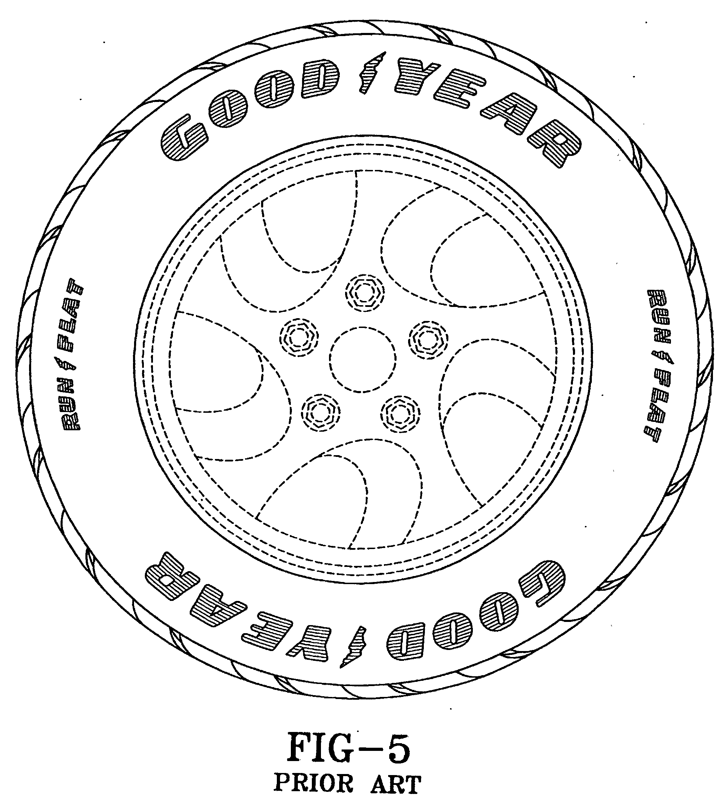

The invention described above of outlining the black lettering with an contrasting surface of black lettering is a subtle but remarkably effective way of achieving a three dimensional illusion that makes the lettering appear to jump out or into the tire's sidewall. The inventor of the present invention found that the tire's lettering of the present invention are visually more readable than the prior art concepts of enhancing the appearance of black lettering on black tires. In FIGURE 5, the prior art sidewall shows a serrated pattern for lettering. The letter size is the same as the pattern A of FIGURE 3. The prior art letters are spaced to maintain readability. In contrast the superimposed patterns A and B in either embodiment of the present invention within almost the same circumferential space is able to have the underlying larger letter pattern run together at adjacent letters while still being totally legible. Using only one pattern A or B of run together lettering would be almost impossible to read without the addition of the superimposed lettering. Furthermore, lettering of such large sizes was heretofore not very practical because the resultant word with space between each letter would be wrapped around the majority of tire. Ideally, the tires name should fit within a 90° quadrant or less. This permits the tire sidewall to exhibit more information. The invention described above permits the use of large letters that can be easily fitted within the desired circumferential space of 90° or less.

In the preferred embodiment, the tire sidewall comprises an elastomer pigmented with carbon black. This sidewall is commonly called a blackwall tire. It is believed that the sidewall could be pigmented white, as in white sidewall tires, or any other color and still achieve the visual contrast effects as described above.

## Claims

1. A tire sidewall (12) having an annular surface (13), the surface having a design pattern, the design pattern having:
a) a first design pattern (A), the first pattern (A) having a plurality of ridges (20) of similar cross-sectional shape, each ridge (20) being substantially parallel to an adjacent ridge (20) of the first pattern (A), the ridges forming an indicia;
b) a second design pattern (B) superimposed over a portion of the first design pattern (A), the second pattern (B) having a substantially flat surface (30) forming an indicia similar to the indicia of the first pattern (A) but smaller in size, wherein the first pattern (A) outlines the second pattern (B), the indicias or letters being formed by a plurality of first (A) and second patterns (B);
**characterized in that** the indicias or letters are closely spaced, the outlining first patterns (A) blending seamlessly into an adjacent letter or indicia outlined by the adjacent first pattern (A).

2. The tire sidewall of claim 1 wherein the first design pattern (A) has ridges (20) radially extending.

3. The tire sidewall of claim 1 wherein the ridges (20) of the first pattern (A) have a trapezoidal cross-section.

4. A tire sidewall having an annular surface, the surface having a design pattern featuring
a) a first design pattern (A), the first pattern (A) having a plurality of ridges (20) of similar cross-sectional shape, each ridge (20) being substantially parallel to an adjacent ridge (20) of the first pattern (A) and inclined relative to the circumferential direction, the first pattern (A) forming an indicia;
b) a second design pattern (B) forming an indicia outlining the first design pattern (A), second pattern (B) having a smooth flat surface (30) extending outwardly from the first pattern (A) and in a generally uniform distance from the ridges of the first pattern (A), the second pattern (B) forming an indicia similar to the indicia of the first pattern (A) out larger in size which outlines the first pattern (A); and
c) a third design pattern (C), the third pattern (C) having substantially parallel ridges (40) relative to an adjacent ridge (40); and wherein the ridges (40) of the third pattern (C) form a circumferential band which outlines both the first (A) and second patterns (B);
the indicia or letters being formed by a plurality of first (A) and second patterns (B), **characterized in that** the indicia or letters are closely spaced, the outlining second patterns (B) blending seamlessly into an adjacent letter or indicia outlined by the adjacent second pattern (B).

5. The tire sidewall (12) of claim 4 wherein the ridges (20) of the first (A) and the ridges (40) of the third design patterns (C) include sets of parallel ridges of dissimilar cross-section or orientation.

6. The tire sidewall (12) of claim 4 wherein the plurality of ridges (20) of the first pattern (A) is positioned over a portion of the second pattern (B) forming alphanumeric characters.

## Patentansprüche

1. Reifenseitenwand (12) mit einer ringförmigen Oberfläche (13), wobei die Oberfläche ein Gestaltungsmuster aufweist, das umfasst:
a) ein erstes Gestaltungsmuster (A), das mehrere Stege (20) mit ähnlicher Querschnittsform aufweist, wobei jeder Steg (20) zu einem benachbarten Steg (20) des ersten Musters (A) im Wesentlichen parallel ist und die Stege eine Kennzeichnung bilden;
b) ein zweites Gestaltungsmuster (B), das einem Abschnitt des ersten Gestaltungsmusters (A) überlagert ist und eine im Wesentlichen ebene Oberfläche (30) besitzt, die eine Kennzeichnung ähnlich der Kennzeichnung des ersten Musters (A) bildet, jedoch eine geringere Größe hat, wobei das erste Muster
(A) das zweite Muster (B) umgibt und die Kennzeichnungen oder Buchstaben durch mehrere erste (A) und zweite Muster
(B) gebildet sind;
**dadurch gekennzeichnet, dass** die Kennzeichnungen oder Buchstaben eng beabstandet sind, wobei die umgebenden ersten Muster (A) nahtlos in einen benachbarten Buchstaben oder eine benachbarte Kennzeichnung, die von dem benachbarten ersten Muster (A) umgeben ist, übergehen.

2. Reifenseitenwand nach Anspruch 1 bei der das erste Gestaltungsmuster (A) radial verlaufende Stege (20) besitzt.

3. Reifenseitenwand nach Anspruch 1, bei der die Stege (20) des ersten Musters (A) einen trapezförmigen Querschnitt besitzen.

4. Reifenseitenwand mit einer ringförmigen Oberfläche, wobei die Oberfläche ein Gestaltungsmuster besitzt, das die folgenden Merkmale aufweist:
a) ein erstes Gestaltungsmuster (A), das mehrere Stege (20) mit ähnlicher Querschnittsform besitzt, wobei jeder Steg (20) zu einem benachbarten Steg (20) des ersten Musters (A) im Wesentlichen parallel und in Bezug auf die Umfangsrichtung geneigt ist, wobei das erste Muster (A) eine Kennzeichnung bildet;
b) ein zweites Gestaltungsmuster (B), das eine das erste Gestaltungsmuster (A) umgebende Kennzeichnung bildet und eine gleichmäßige ebene Oberfläche (30) besitzt, die sich ausgehend vom ersten Muster (A) über eine im Allgemeinen gleichmäßige Strecke von den Stegen des ersten Musters (A) nach außen erstreckt, wobei das zweite Muster (B) eine der Kennzeichnung des ersten Musters (A) ähnliche, jedoch größere Kennzeichnung bildet, die das erste Muster (A) umgibt; und
c) ein drittes Gestaltungsmuster (C), das Stege (40) besitzt, die in Bezug auf einen benachbarten Steg (40) im Wesentlichen parallel sind; wobei die Stege (40) des dritten Musters (C) ein Umfangsband bilden, das sowohl das erste Muster (A) als auch das zweite Muster (B) umgibt;
wobei die Kennzeichnungen oder Buchstaben durch mehrere erste (A) und zweite (B) Muster gebildet sind, **dadurch gekennzeichnet, dass** die Kennzeichnungen oder Buchstaben eng beabstandet sind,
wobei die umgebenden zweiten Muster (B) in einen benachbarten Buchstaben oder eine benachbarte Kennzeichnung, die von dem benachbarten zweiten Muster (B) umgeben ist, nahtlos übergehen.

5. Reifenseitenwand (12) nach Anspruch 4, bei der die Stege (20) des ersten Gestaltungsmusters (A) und die Stege (40) des dritten Gestaltungsmusters (C) Sätze paralleler Stege mit unähnlichem Querschnitt oder unähnlicher Orientierung enthalten.

6. Reifenseitenwand (12) nach Anspruch 4, bei der die mehreren Stege (20) des ersten Musters (A) über einem Abschnitt des zweiten Musters (B), der alphanumerische Zeichen bildet, angeordnet sind.

## Revendications

1. Flanc de bandage pneumatique (12) comportant une surface annulaire (13), la surface possédant un dessin, le dessin contenant :
a) un premier dessin (A), le premier dessin (A) comportant plusieurs nervures (20) de forme similaire en coupe transversale, chaque nervure (20) étant essentiellement parallèle à une nervure adjacente (20) du premier dessin (A), les nervures formant une indication ;
b) un deuxième dessin (B) recouvrant une portion du premier dessin (A), le deuxième dessin (B) comportant une surface essentiellement plate (30) formant une indication similaire à l'indication du premier dessin (A), mais de dimension inférieure, le premier dessin (A) délimitant le deuxième dessin (B), les inscriptions ou les lettres étant formées par plusieurs premier et deuxième dessins (A, B) ;
**caractérisé en ce que** les inscriptions et les lettres sont étroitement espacées, le premier dessin délimitant (A) se confondant sans raccord en une lettre ou en une indication adjacente délimitée par le premier dessin adjacent (A).

2. Flanc de bandage pneumatique selon la revendication 1, dans lequel le premier dessin possède des nervures (20) s'étendant en direction radiale.

3. Flanc de bandage pneumatique selon la revendication 1, dans lequel les nervures (20) du premier dessin possèdent une section transversale de forme trapézoïdale.

4. Flanc de bandage pneumatique (12) comportant une surface annulaire (13), la surface possédant un dessin, le dessin comprenant en particulier :
a) un premier dessin (A), le premier dessin (A) comportant plusieurs nervures (20) de forme similaire en coupe transversale, chaque nervure (20) étant essentiellement parallèle à une nervure adjacente (20) du premier dessin (A) et étant inclinée par rapport à la direction circonférentielle, le premier dessin (A) formant une indication ;
b) un deuxième dessin (B) formant une indication délimitant le premier dessin (A), le deuxième dessin (B) comportant une surface plate lisse (30) s'étendant vers l'extérieur par rapport au premier dessin (A) et à une distance généralement uniforme par rapport aux nervures du premier dessin (A), le deuxième dessin (B) formant une indication similaire à l'indication du premier dessin (A), mais de dimension supérieure, qui délimite le premier dessin (A) ; et
c) un troisième dessin (C), le troisième dessin (C) possédant des nervures (40) essentiellement parallèles par rapport à une nervure adjacente (40), et dans lequel les nervures (40) du troisième dessin (C) forme d'une bande circonférentielle qui délimite à la fois les premier et deuxième dessins (A, B) ; les inscriptions ou les lettres étant formées par plusieurs premier et deuxième dessins (A, B) ;
**caractérisé en ce que** les inscriptions et les lettres sont étroitement espacées, le deuxième dessin délimitant (B) se confondant sans raccord en une lettre ou en une indication adjacente délimitée par le deuxième dessin adjacent (B).

5. Flanc de bandage pneumatique (12) selon la revendication 4, dans lequel les nervures 20 du premier dessin (A) et les nervures (40) du troisième dessin (C) englobent des groupes de nervures parallèles de section transversale ou d'orientation dissemblable.

6. Flanc de bandage pneumatique (12) selon la revendication 4, dans lequel lesdites plusieurs nervures (20) du premier dessin (A) sont disposées par-dessus une portion du deuxième dessin (B) en formant des caractères alphanumériques.
